# FASCICULE DE BREVET EUROPEEN

(11) **EP 1 966 978 B1**
(45) Date de publication et mention de la délivrance du brevet: **27.07.2016**
(21) Numéro de dépôt: 06830148.0
(22) Date de dépôt: 27.11.2006
(51) Int. Cl.: H04L 29/12

(54) **PROCÉDÉ D'AFFECTATION DYNAMIQUE D'ENSEMBLES D'ADRESSES PAR DHCP, ENTITÉ DE GESTION, RELAIS ET PROGRAMME D'ORDINATEUR CORRESPONDANTS**
VERFAHREN ZUM DYNAMISCHEN ZUWEISEN VON MENGEN VON ADRESSEN NACH DHCP, ENTSPRECHENDE VERWALTUNGSENTITÄT, RELAIS UND COMPUTERPROGRAMM
METHOD OF DYNAMICALLY ASSIGNING SETS OF ADDRESSES BY DHCP, CORRESPONDING MANAGEMENT ENTITY, RELAY AND COMPUTER PROGRAM

(30) Priorité: 29.12.2005 FR 0513475
(43) Date de publication de la demande: 10.09.2008
(73) Titulaire: Orange, 75015 Paris (FR)
(72) Inventeur: BATTELLO, Fabien, F-22140 Begard (FR); L'AZOU, Yves, F-22560 Trebeurden (FR)
(74) Mandataire: Vidon Brevets & Stratégie
(86) Numéro de dépôt international: PCT/EP2006/068963
(87) Numéro de publication internationale: WO 2007/074006

(56) Documents cités:
- US-A1- 2005 097 223
- US-B1- 6 880 000
- NAIMING SHEN KISHORE SESHADRI SAID OUISSAL REDBACK NETWORKS TOM S C SOON SBC COMMUNICATIONS DAE-CHEOL ROH KOREA TELECOM: "DHCP Proxy Server Micro-block Allocation Scheme For IP Address Pool Management; draft-shen-dhc-block-alloc-02.txt;" IETF STANDARD-WORKING-DRAFT, INTERNET ENGINEERING TASK FORCE, IETF, CH, no. 2, février 2004 (2004-02), XP015035218 ISSN: 0000-0004
- MCAULEY A J ET AL: "Self-configuring networks" MILCOM 2000. 21ST CENTURY MILITARY COMMUNICATIONS CONFERENCE PROCEEDINGS 22-25 OCTOBER 2000, PISCATAWAY, NJ, USA,IEEE, 22 octobre 2000 (2000-10-22), pages 315-319, XP010532606 ISBN: 0-7803-6521-6

## Description

### 1. Domaine de l'invention

Le domaine de l'invention est celui de l'affectation d'ensembles d'adresses (ou pools d'adresses) de niveau réseau à des équipements d'un réseau.

Plus précisément, l'invention concerne l'affectation dynamique de pools d'adresses IP en utilisant le protocole DHCP (« Dynamic Host Configuration Protocol » pour « protocole de configuration dynamique d'hôte »).

Le protocole DHCP sert principalement à distribuer des adresses IP (« Internet Protocol » pour « Protocole Internet ») à des équipements composant un réseau. Un pool DHCP permet de fournir une adresse IP au client, choisie dans une plage d'adresses (ou sous-réseau IP), afin de permettre à ce client de se connecter aux différents serveurs du réseau auquel il est attaché. L'obtention d'une adresse IP permet, par exemple, au client de recevoir ses courriers électroniques par l'intermédiaire d'un logiciel de réception de courrier.

Dans la suite du document, on utilisera indifféremment les termes « pool » ou « ensemble » pour désigner des ensembles d'adresses IP.

### 2. Solutions de l'art antérieur

### 2.1 Art antérieur

### 2.1.1 Relais DHCP

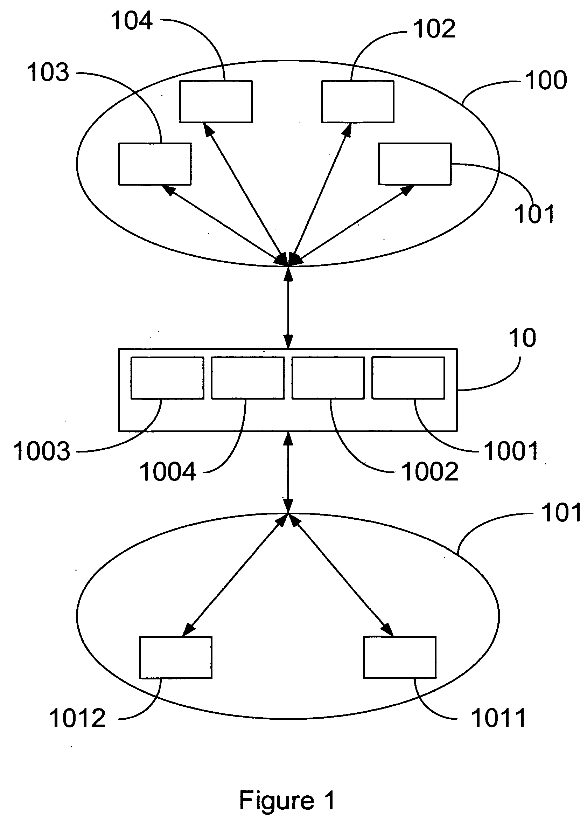

On présente, en lien avec la figure 1, le principe de fonctionnement d'un relais DHCP au sein d'un réseau de communication d'un opérateur.

Les opérateurs de télécommunication utilisent le protocole DHCP pour attribuer les adresses IP aux équipements terminaux de leurs clients et/ou au modem-routeur, afin d'établir la connectivité avec leur réseau et offrir ainsi certains services (Accès à Internet, visioconférence, voix sur IP, télévision numérique, vidéo à la demande, ...).

Le relais DHCP 10 tel qu'il est défini dans le document RFC2131 (document décrivant le protocole DHCP de l'IETF « Internet Engineering Task Force » pour « Détachement d'ingénierie d'Internet », organisme de normalisation de protocoles dans le monde de l'Internet) intervient sur les messages DHCP diffusés en « broadcast » (pour « diffusion générale ») Ethernet. L'objectif premier de ce relais est d'étendre le champ d'action des messages DHCP émis en «broadcast» au delà du réseau local 100 du client (LAN pour «Local Area Network »). Ainsi, par le biais du relais DHCP 10, le client peut émettre (à l'aide des équipements composant son réseau, 101, 102, 103, 104) des messages en diffusion générale, le relais DHCP 10 intervenant pour faire le lien entre le réseau local du client 100 et le réseau de l'opérateur 101.

La principale utilisation d'un relais DHCP 10 est donc une passerelle/routeur du LAN du client 100 relayant les messages DHCP émis sur ce réseau local vers un second LAN 101 (celui de l'opérateur de télécommunication) où se situe le serveur DHCP, autorisant ainsi une séparation physique des réseaux clients, opérateurs et ISP (« Internet Service Provider » pour « Fournisseur de Service Internet »).

De ce fait, le relais DHCP 10 est un équipement faisant partie du domaine d'administration de l'opérateur. Il est situé à la frontière du réseau 101 (cas du DSLAM « Digital Subscriber Line Access Multiplexer » pour « Multiplexeur d'Accès au Réseau DSL») ou au sein même du réseau 101 (cas d'un BRAS « Broadband Remote Access Server » pour « Serveur d'accès distant large bande» ou routeur quand le circuit du client est prolongé/permuté jusqu'à cet équipement).

La fonction de relais DHCP est très largement utilisée par les opérateurs pour relayer les messages DHCP du LAN du client (qui dispose d'équipements 101, 102, 103, 104) vers un (ou des) serveur(s) DHCP situé(s) 1011, 1012 sur le réseau de l'opérateur.

C'est un élément physique du réseau de l'opérateur qui fait office de relais DHCP 10. C'est de manière générale le noeud IP (routeur) au plus près du client qui a cette charge de relayeur (comme par exemple le DSLAM collectant le trafic des clients).

Le réseau local du client (par le biais du modem) peut être rattaché au relais DHCP par une interface physique se décomposant en sous-interfaces logiques telles que des VC (pour « Virtual Channel » ou « Canal Virtuel ») ATM (« Asynchronous Transfer Mode » pour « Mode de Transfert Asynchrone ») ou des VLANs (« Virtual Local Area Network » pour « Réseau Local Virtuel ») Ethernet.

Dans l'élément de réseau où est implantée la fonction relais DHCP, c'est dans la configuration IP de chaque sous-interface logique (1001, 1002, 1003, 1004) qu'est fait le lien avec un pool d'adresses DHCP qui sera utilisé pour servir le client dans le cadre de cette sous-interface. Autrement dit, chaque sous-interface logique (1001, 1002, 1003, 1004) attribuée au réseau local du client dans le relais DHCP 10 dispose d'une adresse IP qui sert de lien avec les adresses IP attribuées dans le réseau local 100, ces adresses étant attribuées au modem ou aux équipements 101, 102, 103, 104. Ainsi, un client disposant d'un réseau local où sont lancés quatre services (par le biais de quatre équipements 101, 102, 103, 104) correspondant à quatre sous-interfaces logiques (1001, 1002, 1003, 1004) disposera de quatre adresses IP attribuées à l'aide du protocole DHCP.

### 2.1.2 Sélecteur de pool

Plusieurs pools peuvent être déclarés dans le serveur DHCP, ils peuvent permettre l'adressage de différents services (Accès à Internet, visioconférence, voix sur IP, télévision numérique, vidéo à la demande, ...) nécessitant des plans d'adressage IP distincts. Le serveur DHCP fait office de sélecteur de pool pour l'attribution des adresses IP.

De manière générale, l'équipement relais DHCP donne au serveur DHCP une indication du pool à sélectionner à l'aide du champ DHCP « giaddr » de la requête DHCP. Ce champ identifie l'adresse de la passerelle. Le champ « giaddr » est mis à jour, par le relais DHCP, au passage de la requête d'attribution d'une adresse IP émise par un équipement du réseau local du client. L'équipement relaie la requête vers le serveur DHCP, en renseignant le champ « giaddr » qui joue, par la suite, le rôle d'indicateur de sélection de pool auprès du serveur DHCP (comme cela est décrit dans le document de normalisation RFC2131).

Le serveur DHCP détermine alors le pool dans lequel il va servir le client. Cette sélection peut s'effectuer sur plusieurs critères, néanmoins le premier critère pris en compte par le sélecteur de pool (le serveur DHCP) est généralement le « giaddr ».

Le serveur DHCP peut, selon la stratégie, choisir une adresse libre quelconque dans le pool (la première libre par exemple) ou utiliser des critères additionnels tels l'adresse MAC (adresse machine) ou l'identifiant de ligne client pour restreindre le choix à une plage d'adresses ou une adresse précisément.

Il apparaît donc que le champ « giaddr » joue un double rôle :
- Un rôle de connectivité IP entre le relais DHCP et le serveur DHCP. En effet l'adresse « giaddr » doit être « routable » sur le réseau IP car le serveur DHCP répond au relais DHCP localisé à l'adresse IP « giaddr » ;
- Un rôle de sélection de pool. Le « giaddr » et le pool appartiennent au même sous-réseau (« subnet ») IP, c'est ainsi que le serveur DHCP reconnaît le pool indiqué et le sélectionne.

L'IETF (« Internet Engineering Task Force » pour « Détachement d'ingénierie d'Internet ») a également défini d'autres possibilités d'indiquer le pool, en créant de nouveaux indicateurs positionnés par le client (« Subnet Selection Option » pour « Option de Sélection du Sous Réseau » dans la RFC3011) ou par le relais (« Link-Selection Suboption » pour « Sous Option de Sélection du Lien », RFC3527). Dans ces modes de fonctionnement, le champ « giaddr » perd son rôle d'indicateur de pool.

Il apparaît donc que le lien entre la configuration IP d'une interface et le pool DHCP qui sera utilisé pour servir le client est réalisé principalement par le « giaddr ».

### 2.2 Inconvénients de l'art antérieur

Un inconvénient majeur de cette technique de l'art antérieur est que la configuration IP de chaque interface est liée statiquement au pool. Rappelons qu'une interface du réseau local du client est liée à un ou plusieurs services (Accès à Internet, visioconférence, voix sur IP, télévision numérique, vidéo à la demande,...). En conséquence, la configuration de chaque service est liée au pool. En effet, chaque interface est rattachée statiquement par configuration à une valeur de « giaddr », et par conséquent est rattachée statiquement à un pool particulier, puisque c'est la valeur de «giaddr» qui est utilisée par le serveur DHCP pour sélectionner le pool dans lequel il va servir le client.

Un inconvénient corollaire de cette technique de l'art antérieur est que les pools d'adresse sont affectés de manière statique, entraînant une surconsommation importante d'adresses IP, problématique quand il s'agit d'adresses IPv4 publiques, dont le nombre est extrêmement limité.

Cette surconsommation peut être due à plusieurs facteurs, parmi lesquels :
- La faible part de clients connectés (raccordés et utilisant le service) en rapport au nombre de clients raccordés (ayant souscrit au service mais ne l'activant pas à un instant t),
- Le raccordement progressif de nouveaux clients.

En effet, comme chaque pool d'adresses peut être lié à un service (par exemple un pool pour l'accès à Internet, un pool pour la visioconférence, un pool pour la voix sur IP, etc.), chacun de ces pools doit contenir suffisamment d'adresses pour satisfaire tous les clients qui ont souscrit aux services. Par exemple, si 2000 clients ont souscrit au service d'accès à Internet, le pool en charge de cette interface doit contenir au minimum 2000 adresses. Alors même que seuls quelques clients peuvent être simultanément connectés au service à un instant donné (par exemple 200). On a donc, dans ce cas de figure, une consommation très importante d'adresses inutilement.

Pour ce qui est du raccordement progressif de nouveaux clients, la technique de l'art antérieur pose également problème, puisqu'elle oblige à redéfinir manuellement les dimensionnements des pools en fonction de l'arrivée des nouveaux clients ou encore de la souscription à de nouveaux services des clients existants. Ainsi, si un 2001^{ième} client souhaite accéder au service d'accès à Internet, il faut alors reconfigurer le pool en charge de cette interface pour qu'il contienne au moins 2001 adresses disponibles. D'autant que les ajouts de pools se font par incréments suffisamment importants pour éviter de répéter l'opération. Cette reconfiguration (manuelle) s'avère gênante en augmentant le temps d'attente du client avant qu'il puisse accéder au service souhaité.

Pour pallier les phénomènes de surconsommation d'adresse IP, une méthode d'allocation dynamique d'adresse est proposée dans le document US 2005/097223. Cependant cette méthode d'allocation est mise en oeuvre dans les relais DHCP, ce qui rend l'attribution des adresses relativement peu efficace et complexe.

On connaît par ailleurs du document de brevet US 6 880 000 un concept de réseau hiérarchique par lequel des serveurs de niveau supérieur sont à même d'allouer des ensembles d'adresses à des serveurs de niveau inférieur.

Le document « DHCP Proxy Server Micro-block Allocation Scheme For IP Address Pool Management », IETF Standard-Working-Draft, n°2, février 2004 décrit quant à lui une technique d'allocation d'adresses IP, appelée « micro-blocking ».

### 3. Objectifs de l'invention

L'invention a notamment pour objectif de pallier ces inconvénients de l'art antérieur.

Plus précisément, un objectif de l'invention est de fournir une technique d'attribution des pools d'adresses IP qui soit dynamique, et libérée des contraintes liées à la valeur du champ « giaddr ».

Un autre objectif de l'invention est d'assurer une adéquation optimale entre le nombre d'adresses IP disponibles dans un ensemble d'adresses et le nombre de clients connectés et ayant besoin d'une adresse dans un de ces ensembles.

Plus précisément, un objectif de l'invention est de fournir une technique permettant de ne pas avoir à redéfinir le contenu des ensembles d'adresses IP quand un nouveau client souscrit à un service et d'éviter les inconvénients des systèmes classiques mettant en oeuvre une redéfinition manuelle des pools d'adresse IP pour le raccordement des nouveaux clients.

L'invention a ainsi pour objectif de proposer une technique d'allocation d'adresses IP à un client qui soit plus simple et plus évolutive que selon l'art antérieur.

### 4. Résumé de l'invention

Ces objectifs, ainsi que d'autres qui apparaîtront par la suite, sont atteints à l'aide d'un procédé de gestion selon la revendication 1 mis en oeuvre dans une entité de gestion d'ensembles d'adresses IP, qui comprend :
- une étape de réception d'une requête d'allocation d'une adresse IP à un terminal client ;
- une étape de sélection d'un ensemble d'adresses IP au sein duquel choisir ladite adresse IP à allouer parmi :
   - soit au moins un premier ensemble d'adresses IP existant ;
   - soit au moins un deuxième ensemble d'adresses IP nouvellement créé en fonction d'au moins un paramètre prédéterminé ;
- une étape de transmission à un relais DHCP apte à allouer ladite adresse IP audit terminal client d'une information d'identification dudit ensemble d'adresses IP sélectionné.

Ainsi, l'invention propose une approche nouvelle et inventive de l'allocation d'adresses. En effet, la demande d'allocation est propagée à une entité servant de centre de gestion des pools d'adresses IP. Cette entité de gestion inspecte un ou plusieurs premier(s) ensemble(s) d'adresses IP susceptible(s) de contenir une adresse pouvant être disponible pour le client qui en a fait la demande. Si ce ou ces premier(s) ensemble(s) d'adresses ne répond(ent) pas à certains paramètres de gestion et ne permet(tent) donc pas l'attribution d'une adresse, alors l'entité est à même :
- de créer un nouvel ensemble dans lequel le client pourra être servi ;
- et de le sélectionner comme nouvel ensemble par défaut.

L'invention permet donc, entre autres, de créer des pools d'adresses IP à la volée, sans avoir besoin de définir manuellement des plages d'adresses dans des pools particuliers.

On notera que la création d'un nouveau pool d'adresses n'est pas nécessairement conditionnée à l'absence d'adresse IP disponible dans le ou les pools déjà existants, mais peut être effectuée par anticipation.

En effet, ledit au moins un paramètre prédéterminé est une information représentative d'un taux de remplissage dudit premier ensemble d'adresses IP.

Cette indication de taux de remplissage est utilisée pour déterminer si un ensemble peut répondre à une demande d'allocation de la part d'un client. Le taux de remplissage mesure, par exemple, le nombre d'adresses IP déjà allouées dans un ensemble. Si ce nombre vient à dépasser un nombre déterminé, qui peut par exemple être fixé à un pourcentage du nombre d'adresses disponibles dans le pool à sa création, alors l'entité de gestion peut décider de créer un nouvel ensemble d'adresses pour répondre à la demande du client, ou par anticipation sur une demande future d'un client.

Avantageusement, l'information d'identification de l'ensemble d'adresses IP sélectionné est transmise au relais DHCP en utilisant un champ spécifique dans un message DHCP. L'information d'identification de l'ensemble d'adresses IP sélectionné peut également être transmise par un autre moyen, tel qu'un protocole spécifique de communication.

Ainsi, l'entité de gestion est à même de faire part de sa sélection au relais DHCP, afin que ce dernier puisse choisir une adresse IP pour son client dans l'ensemble sélectionné. Cette information d'identification peut transiter par l'intermédiaire d'un serveur DHCP sous la forme d'un message DHCP contenant un champ spécifique. Ce message peut être la réponse à la demande d'allocation transmise par le relais DHCP. L'information d'identification est par conséquent connue du serveur DHCP qui transmet le message DHCP au relais.

De façon préférentielle, le serveur DHCP utilise ladite information d'identification dudit ensemble d'adresses IP sélectionné pour administrer ledit ensemble d'adresses IP sélectionné.

Ainsi le pool nouvellement créé par l'entité de gestion est pris en charge par un serveur DHCP et peut être utilisé de la même façon que tout autre ensemble d'adresses IP déjà créé.

Dans un mode de réalisation de l'invention, ladite entité de gestion des ensembles d'adresses IP est un serveur DHCP.

De cette façon, le serveur DHCP est à même de construire lui-même un ensemble de pools d'adresses IP, sans intervention extérieure. Le serveur DHCP peut donc toujours répondre aux demandes d'allocation émises et propager la création des pools d'adresses IP qu'il crée.

L'entité de gestion d'ensembles d'adresses IP peut également, dans un autre mode de réalisation, être commune à plusieurs serveurs DHCP.

L'invention concerne également les entités de gestion des ensembles d'adresses IP, mettant en oeuvre le procédé décrit ci-dessus. Avantageusement de telles entités disposent :
- de moyens de réception d'une requête d'allocation d'une adresse IP à un terminal client ;
- de moyens de création d'au moins un ensemble d'adresses IP,
- de moyens de sélection, d'un ensemble d'adresses IP au sein duquel choisir une adresse IP à allouer parmi :
   - Soit au moins un premier ensemble d'adresses IP existant ;
   - Soit au moins un deuxième ensemble d'adresses IP nouvellement créé en fonction d'au moins un paramètre prédéterminé ;

Ces moyens permettent à ces entités de réaliser une gestion optimisée des pools d'adresses IP dont elles ont la charge sans qu'il y ait surconsommation d'adresses IP lors de la souscription de services par le client et sans qu'il soit nécessaire de reconfigurer les ensembles d'adresses à chaque raccordement de nouveaux clients.

L'invention concerne également un procéde selon la revendication 5 d'allocation d'une adresse IP, par un relais DHCP, à un terminal client, qui comprend:
- une étape de réception d'une information d'identification d'un ensemble d'adresses IP sélectionné parmi :
   - soit au moins un premier ensemble d'adresses IP existant ;
   - soit au moins un deuxième ensemble d'adresses IP nouvellement créé en fonction d'au moins un paramètre prédéterminé ;
- une étape d'allocation audit terminal client d'une adresse IP choisie dans ledit ensemble d'adresses IP sélectionné.

Avantageusement, ledit relais DHCP annonce à au moins un équipement dudit réseau de communication, ledit ensemble d'adresses IP sélectionné, par le biais de protocoles de routages, quand ledit ensemble d'adresses IP sélectionné est nouvellement créé.

Cette annonce a pour conséquence la prise en compte des nouvelles adresses dans les tables de routage des équipements routeurs du réseau participant au routage du trafic à destination des clients concernés, et donc assure le bon fonctionnement du routage vers ces clients dans le réseau.

L'invention concerne encore les relais DHCP comprenant des moyens d'allocation à un terminal client d'au moins une adresse IP.

Selon l'invention, de tels relais comprennent des moyens de réception d'une information d'identification d'un ensemble d'adresses IP sélectionné parmi :
- soit au moins un premier ensemble d'adresses IP existant ;
- soit au moins un deuxième ensemble d'adresses IP nouvellement créé en fonction d'au moins un paramètre prédéterminé ;
et lesdits moyens d'allocation sont aptes à choisir ladite adresse IP à allouer au sein dudit ensemble d'adresses IP sélectionné identifié par ladite information d'identification reçue.

Ainsi, de tels relais sont aptes à recevoir les informations envoyées par les entités de gestion des ensembles d'adresses IP. Dans un mode de réalisation de l'invention, de tels relais sont en outre capables d'interpréter l'information d'identification dudit ensemble d'adresses IP sélectionné par ladite entité de gestion en tenant compte du champ spécifique contenu dans un message DHCP.

L'invention concerne encore les programmes d'ordinateurs comprenant des instructions de code de programme pour la mise en oeuvre des étapes du procédé de gestion et du procédé d'allocation décrits ci-dessus.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1, déjà commentée, présente un schéma du principe de fonctionnement d'un relais DHCP au sein d'un réseau de communication d'un opérateur ;
- la figure 2 illustre le processus de création et d'affectation dynamique au sein d'un serveur DHCP ;
- la figure 3 décrit le processus de création et d'affectation dynamique en lien avec une entité de gestion des ensembles d'adresses IP.
- la figure 4 illustre, de façon schématique, la structure matérielle du serveur DHCP.
- la figure 5 illustre, de façon schématique, la structure matérielle d'une entité de gestion indépendante du serveur DHCP.

### 6. Description détaillée de l'invention

### Rappel du principe de l'invention

Dans le cadre de la présente invention, on s'intéresse donc à l'affectation dynamique des ensembles d'adresses IP (ou pool d'adresses IP) en utilisant le protocole DHCP.

L'invention propose donc d'intégrer une dimension dynamique dans l'affectation des pools par DHCP. Cette nouvelle dimension dans l'affectation des pools permet une économie d'adresses en accordant au mieux les pools d'adresses en fonction des adresses réellement consommées. Ainsi, pour chaque service rendu, il n'existe plus un mais plusieurs pools d'adresses IP dans lesquels les clients se voient attribuer des adresses.

Cette nouvelle dimension est apportée en :
- détectant un seuil (configurable) de remplissage du pool ;
- en créant si besoin un nouveau pool ;
- en signifiant à l'équipement relais (le relais DHCP) le nouveau pool de rattachement (ce que la technique actuelle ne permet pas de faire puisque chaque pool d'adresse est attaché statiquement à une valeur de « giaddr »).

Cette affectation dynamique des ensembles d'adresses IP permet de supprimer le rattachement statique d'une interface dans l'équipement relais DHCP, et de tenir compte des contraintes d'occupation des pools.

Par conséquent, c'est l'équipement relais qui associe la configuration IP de l'interface avec le sous réseau IP correspondant.

En d'autres termes, l'équipement relais n'utilise plus la valeur de « giaddr » pour le choix du pool que dans une première phase. Le serveur DHCP (ou l'entité de gestion commune à plusieurs serveurs DHCP) utilise d'abord « giaddr » pour évaluer le pool auquel il se réfère, puis par la suite, si le pool atteint un certain taux de remplissage, alors le serveur DHCP renvoie au relais (par exemple dans la Link-Selection Suboption du message DHCP) le nouveau pool à utiliser.

L'équipement relais DHCP est alors en mesure d'associer dynamiquement l'interface de rattachement du client à un sous réseau IP et, si ce sous réseau IP n'est pas encore utilisé, de l'annoncer vers les autres équipements du réseau par les protocoles de routage dynamiques tels RIP, BGP, ...

Dans un mode de réalisation complémentaire de l'invention, la décision de création d'un nouveau pool n'est pas liée au seul taux de remplissage du pool. Pour des raisons de performance, la décision de création peut également être subordonnée à une plage horaire (par exemple une plage horaire dans laquelle on sait que les demandes d'attributions sont nombreuses) et ainsi devancer les futures demandes d'allocation.

Par la suite, on présente notamment le cas d'un serveur DHCP jouant le rôle de fournisseur dynamique de pools d'adresses IP ainsi qu'une entité de gestion fédérant la gestion des ensembles d'adresses pour le compte de plusieurs serveurs DHCP. Il est clair cependant que l'invention ne se limite pas à cette application particulière, mais peut également être mise en oeuvre dans de nombreux autres domaines, et par exemple dans le monde des télécommunications, quand un terminal de radiocommunication souhaite accéder à des service de diffusion numériques d'un opérateur de télécommunication et que cet accès nécessite l'attribution dynamique d'une adresse de niveau réseau et plus généralement dans tous les cas où les objectifs listés dans ce document sont intéressants.

### Description d'un mode de réalisation

### Serveur DHCP fournisseur dynamique de pool d'adresses IP

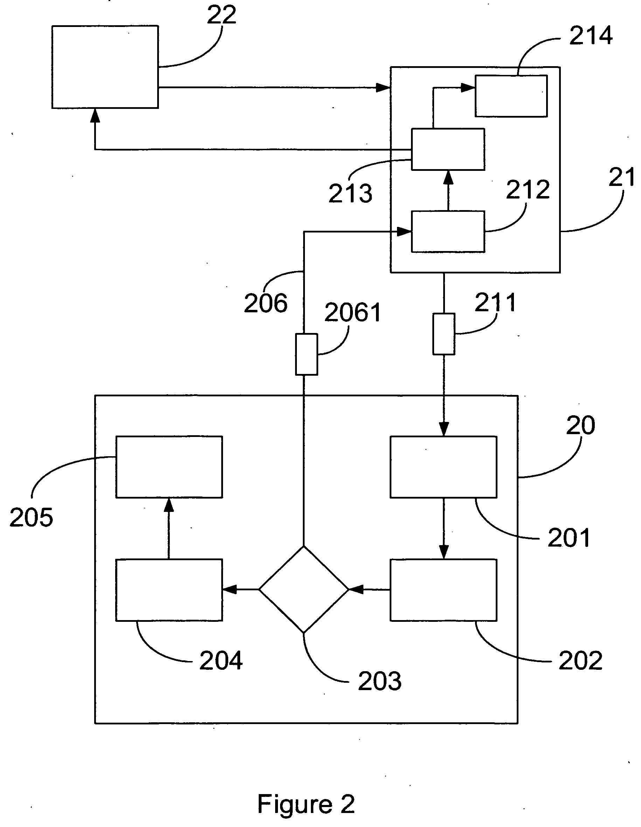

On présente, en relation avec la figure 2, une illustration simplifiée d'un serveur DHCP possédant des capacités de fourniture dynamique d'ensembles d'adresses IP et répondant à une requête d'attribution d'adresse IP.

Le serveur DHCP 20 reçoit une requête d'allocation de la part d'un client 22. Cette requête est relayée par un relais DHCP 21. En inspectant la valeur du champ « giaddr » 211 fourni par le relais DHCP 21, le serveur DHCP 20 :
- Identifie (201) le pool initial auquel s'attache le relais DHCP 21 ;
- Détermine (202) le taux de remplissage de ce pool ;
- Crée (204) un nouvel ensemble d'adresses IP si (203) le taux de remplissage est supérieur à un seuil maximum prédéterminé ;
- Prend en charge (205) ce pool nouvellement créé ;
- Forme une réponse 206 à l'équipement relais en signifiant (2061) le pool à utiliser. Dans un mode de réalisation particulier, cette signalisation peut être réalisée à l'aide d'un protocole utilisé pour la commande de l'équipement relais. Dans un autre mode de réalisation, il est également possible d'utiliser un champ existant dans une réponse DHCP (par exemple « Link-Selection Suboption » pour « Sous Option de Sélection du Lien »).

Le relais DHCP 21 :
- Reçoit (212) la réponse du serveur DHCP 20 ;
- Procède (213) au rattachement du client au pool indiqué par le serveur 20 ;
- Annonce (214) aux équipements du réseau le pool (s'il est nouveau) à utiliser à l'aide d'un protocole de routage (RIP, BGP, IS-IS, ...).

Dans ce mode de réalisation, le serveur DHCP 20 est utilisé à la fois pour réaliser l'administration des pools d'adresses et pour créer de nouveaux pools à l'usage des différents sous-réseaux.

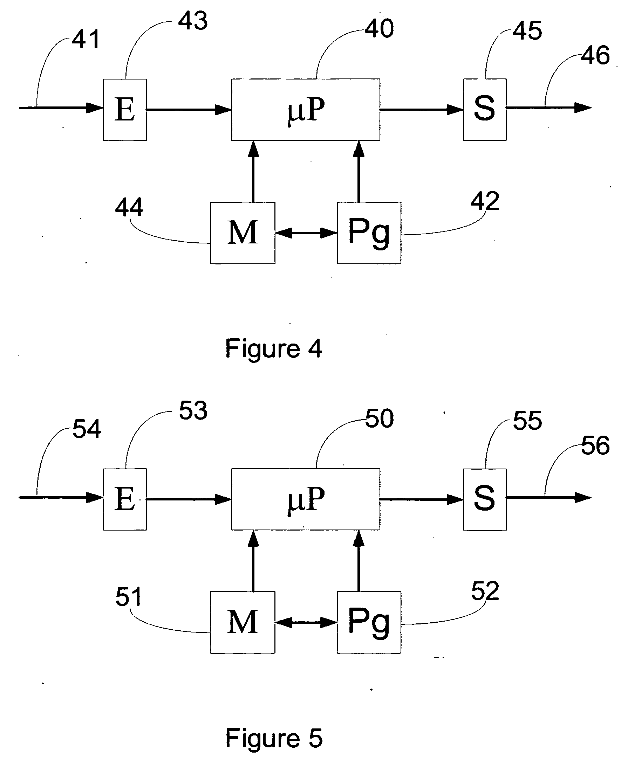

La structure du serveur est illustrée schématiquement par la figure 4. Il comprend une mémoire M 41, et une unité de traitement 40 équipée d'un microprocesseur µP, qui est piloté par un programme d'ordinateur (ou application) Pg 42. L'unité de traitement 40 reçoit en entrée, via un module d'interface d'entrée réseau E 43, des requêtes et/ou des réponses clients 44, que le microprocesseur µP traite, selon les instructions du programme Pg 42, pour générer des commandes et/ou des réponses 46, qui sont transmises via un module d'interface de sortie réseau S 45.

Dans un mode de réalisation alternatif, il est possible de disposer de plusieurs serveurs DHCP au sein du réseau de l'opérateur et de configurer ces serveurs afin qu'ils adressent des ensembles de pools d'adresses liés à certains services. Dans ce cas, le réseau de l'opérateur comportera un serveur DHCP par service à fournir au client. Chacun de ces serveurs DHCP est alors à même d'administrer dynamiquement plusieurs ensembles d'adresses IP liés à un seul service.

### Entité de gestion fédératrice d'ensembles d'adresses IP

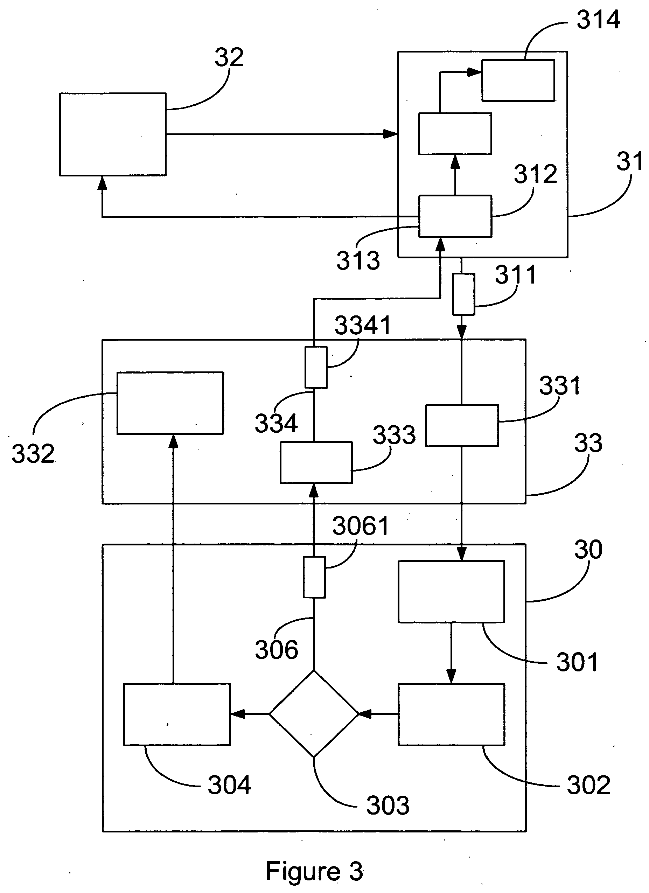

On présente, en relation avec la figure 3, une illustration simplifiée d'une entité de gestion d'ensembles d'adresses IP pour le compte de plusieurs serveurs DHCP.

Le serveur DHCP 33 reçoit une requête d'allocation de la part d'un client 32. Cette requête est relayée par un relais DHCP 31. Le serveur DHCP 33 :
- Transmet (331) la demande d'allocation à l'entité de gestion de pool 30, par le biais d'un protocole de communication spécifique ;

En inspectant la valeur du champ « giaddr » 311 fourni par le relais DHCP 31, l'entité de gestion de pool 30 :
- Identifie (301) le pool initial auquel s'attache le relais DHCP 31 ;
- Détermine (302) le taux de remplissage de ce pool ;
- Crée (304) un nouvel ensemble d'adresses IP si 303 le taux de remplissage est supérieur à un seuil prédéterminé (par exemple, le pool est utilisé à plus de 80%) ;
- Forme une réponse 306 au serveur DHCP 33 en signifiant 3061 le pool à utiliser.

Le serveur DHCP 33 :
- Prend en charge (332) le pool nouvellement créé ;
- Forme (333) une réponse (334) à l'équipement relais 31 en signifiant (3341) le pool à utiliser.

Le relais DHCP 31 :
- Reçoit (312) la réponse du serveur 33 ;
- Procède (313) au rattachement du client 32 au pool indiqué par le serveur 33 ;
- Annonce (314) aux équipements du réseau le pool à utiliser (s'il est nouveau) à l'aide d'un protocole de routage (RIP, BGP, IS-IS, ...).

Dans ce mode particulier de réalisation, le serveur DHCP ne régit pas directement les pools, mais communique avec une entité qui gère les pools, entité commune aux serveurs DHCP. Le rôle de l'entité est de gérer un ensemble de pools communs à tous les serveurs DHCP et de les distribuer au fur et à mesure des besoins vers les différents serveurs Cette entité peut être régionalisée ou centralisée en fonction des besoins des opérateurs.

La structure de l'entité de gestion est illustrée schématiquement par la figure 5. Elle comprend une mémoire M 51, et une unité de traitement 50 équipée d'un microprocesseur µP, qui est piloté par un programme d'ordinateur (ou application) Pg 52. L'unité de traitement 50 reçoit en entrée, via un module d'interface d'entrée réseau E 53, des requêtes et/ou des réponses clients 54, que le microprocesseur µP traite, selon les instructions du programme Pg 52, pour générer des commandes et/ou des réponses 56, qui sont transmises via un module d'interface de sortie réseau S 55.

Il est également possible, dans un mode de réalisation alternatif, qu'une entité ne s'occupe que d'un certain type d'interface (ou de service). Le réseau possèderait alors plusieurs entités de gestion, chacune chargée de l'administration d'un sous réseau : une entité pour l'accès aux services Internet, une entité pour l'accès à la visioconférence, etc.

### Autres caractéristiques et avantages / Autres aspects

### Exemple d'implémentation

Dans un mode particulier de réalisation de l'invention, le serveur DHCP intègre un module principal. Ce module fonctionne en mode client/serveur et communique avec un module client implanté au sein de l'équipement relais DHCP.

Le module principal serveur permet de signifier le pool DHCP à utiliser à l'équipement relais DHCP.

Cette commande peut être réalisée dans le protocole DHCP à l'aide d'une option DHCP existante ou à l'aide d'un autre protocole.

Le module principal client à l'aide des informations fournies par le module principal serveur est alors en mesure d'associer dynamiquement (dans l'équipement relais) l'interface de rattachement du client à un sous réseau IP (lié au pool préalablement décidé) et, si ce sous réseau IP n'est pas encore utilisé, de l'annoncer vers le réseau par les protocoles de routage dynamiques tels RIP, BGP,...

L'entité de gestion à proprement parler est implantée, selon sa configuration, respectivement dans le serveur DHCP (qui gère directement les pools) ou dans une entité gérant les pools et communiquant avec les serveurs DHCP, de manière à octroyer dynamiquement et en fonction des besoins des pools aux serveurs DHCP. L'entité se présente alors sous la forme d'un module secondaire (module décisionnaire).

Le module décisionnaire gère les pools et veille à optimiser leur utilisation en fonction de critères configurables (administrables) tels que des seuils d'utilisation.

Quand le module décisionnaire décide de l'utilisation d'un nouveau pool, le module principal est activé dans le serveur DHCP concerné.

### Cas de la substitution de l'équipement relais

Dans le processus d'accès à un service pour un client d'un opérateur ou d'un fournisseur de services Internet, il se peut qu'une étape d'authentification préliminaire ait lieu avant l'acquisition d'une adresse IP par le protocole DHCP. Cette étape consiste à vérifier les droits d'usage du client, à l'aide de protocoles tels que RADIUS ou TACACS. Ce cas peut, par exemple, se produire au sein d'un DSLAM initiant une phase d'authentification d'un point de vue du protocole 802. IX (l'authentification est alors réalisée à partir des paramètres physiques de la ligne du client, par exemple ligne téléphonique dans la cas xDSL).

Dans un mode particulier de réalisation de l'invention, l'utilisation d'un nouveau pool pourra être décidée au cours de cette étape préliminaire d'authentification. Dans ce cas, ce n'est plus l'équipement relais qui adresse la requête de choix du pool à l'entité de gestion de pool, mais l'équipement en charge de l'authentification. L'entité de gestion ou le serveur DHCP détermine le pool à utiliser, ou créé un nouveau pool au besoin.

L'équipement en charge de l'authentification transmet cette information à l'équipement relais, qui conserve la mémoire de cette information (à savoir le pool de rattachement), afin de l'utiliser au cours de l'étape DHCP, sans devoir à nouveau faire appel au serveur DHCP ou à l'entité de gestion.

Lors du processus DHCP, l'équipement relais indique dans le message DHCP (à l'aide du champ giaddr ou de la Link-Selection Suboption ou par d'autres moyens) le pool à utiliser.

## Revendications

1. Procédé de gestion mis en oeuvre dans une entité de gestion d'ensembles d'adresses IP (20); 30), comprenant :
- une étape de réception d'une requête d'allocation d'une adresse IP à un terminal client (22_;32) ;
- une étape d'identification (201 ; 301), à partir de ladite requête d'allocation reçue, d'au moins un premier ensemble d'adresses IP existant ;
**caractérisé en ce qu'**il comprend également :
- une étape de détermination (202 ; 302) d'un taux de remplissage dudit premier ensemble d'adresses IP ;
en fonction d'au moins un paramètre prédéterminé lié audit taux de remplissage (203 ;303), une étape de création (204 ; 304) d'
- au moins un deuxième nouvel ensemble d'adresses IP;
- une étape de transmission (2061) à un relais DHCP (21 ; 31) apte à allouer ladite adresse IP audit terminal client (22 ; 32) d'une information d'identification d'un ensemble d'adresses IP au sein duquel choisir ladite adresse IP à allouer, sélectionné parmi ledit au moins un premier ensemble d'adresses existant et ledit au moins un deuxième nouvel ensemble d'adresses IP créé.

2. Procédé de gestion selon la revendication 1, **caractérisé en ce que** ladite information d'identification dudit ensemble d'adresses IP sélectionné est transmise audit relais DHCP (21) en utilisant un champ spécifique dans un message DHCP.

3. Procédé de gestion selon la revendication 1, **caractérisé en ce que** ladite entité de gestion des ensembles d'adresses IP (20) est un serveur DHCP.

4. Entité de gestion d'ensembles d'adresses IP, apte à communiquer avec au moins un relais DHCP, comprenant :
- des moyens de réception d'une requête d'allocation d'une adresse IP à un terminal client (22) ;
- des moyens d'identification, à partir de ladite requête d'allocation reçue, d'au moins un premier ensemble d'adresses IP existant ;
- **caractérisé en ce qu'**elle comprend également :
- des moyens de détermination d'un taux de remplissage dudit premier ensemble d'adresses IP;
- des moyens, mis en oeuvre en fonction d'au moins un paramètre prédéterminé lié audit taux de remplissage, de création d'au moins un deuxième nouvel ensemble d'adresses IP,
- des moyens de transmission (2061) à un relais DHCP (21) apte à allouer ladite adresse IP audit terminal client d'une information d'identification d'un ensemble d'adresses IP au sein duquel choisir ladite adresse IP à allouer, sélectionné parmi ledit au moins un premier ensemble d'adresses existant et ledit au moins un deuxième nouvel ensemble d'adresses IP créé.

5. Procédé d'allocation d'une adresse IP, par un relais DHCP, à un terminal client (22), comprenant une étape d'émission d'une requête d'allocation d'une adresse IP à un terminal client (22), ladite requête d'allocation identifiant (211 ; 311) au moins un premier ensemble d'adresses IP existant,
**caractérisé en ce qu'il** comprend:
- une étape de réception (212 ; 312) d'une information d'identification d'un ensemble d'adresses IP au sein duquel choisir ladite adresse IP à allouer, sélectionné parmi :
- soit ledit au moins un premier ensemble d'adresses IP existant- ;
- soit au moins un deuxième ensemble d'adresses IP nouvellement créé en fonction d'au moins un paramètre prédéterminé lié à un taux de remplissage dudit au moins un premier ensemble d'adresses IP existant ;
- une étape d'allocation (213) audit terminal client d'une adresse IP choisie dans ledit ensemble d'adresses IP sélectionné.

6. Procédé d'allocation selon la revendication 5, **caractérisé en ce que** ledit relais DHCP (21) annonce (214) à au moins un équipement dudit réseau de communication, ledit ensemble d'adresses IP sélectionné, par le biais d'au moins un protocole de routage, quand ledit ensemble d'adresses IP sélectionné est nouvellement créé.

7. Relais DHCP comprenant des moyens d'émission d'une requête d'allocation d'une adresse IP à un terminal client (22), ladite requête d'allocation identifiant au moins un premier ensemble d'adresses IP existant, et des moyens d'allocation à un terminal client d'au moins une adresse IP, **caractérisé en ce qu'**il comprend des moyens de réception d'une information d'identification d'un ensemble d'adresses IP sélectionné parmi :
- soit ledit au moins un premier ensemble d'adresses IP existant ;
- soit au moins un deuxième ensemble d'adresses IP, nouvellement créé en fonction d'au moins un paramètre prédéterminé lié à un taux de remplissage dudit au moins un premier ensemble d'adresses IP existant;
et **en ce que** lesdits moyens d'allocation sont aptes à choisir ladite adresse IP à allouer au sein dudit ensemble d'adresses IP sélectionné identifié par ladite information d'identification reçue.

8. Programme d'ordinateur, **caractérisé en ce qu'**il comprend des instructions de code de programme pour l'exécution des étapes du procédé de gestion selon la revendication 1, lorsqu'il est exécuté par un ordinateur.

9. Programme d'ordinateur, **caractérisé en ce qu'**il comprend des instructions de code de programme pour l'exécution des étapes du procédé d'allocation selon la revendication 5, lorsqu'il est exécuté par un ordinateur.

## Patentansprüche

1. Verwaltungsverfahren, das in einer Verwaltungsentität von IP-Adresseinheiten (20; 30) eingesetzt wird, umfassend:
- einen Schritt des Empfangs eines Antrags auf Zuweisung einer IP-Adresse an ein Kundenendgerät (22; 32);
- auf Basis des erhaltenen Zuweisungsantrags einen Schritt der Identifikation (201; 301) mindestens einer ersten bestehenden IP-Adresseinheit;
**dadurch gekennzeichnet, dass** es auch Folgendes umfasst:
- einen Schritt der Bestimmung (202; 302) einer Füllrate der ersten IP-Adresseinheit;
- in Abhängigkeit von mindestens einem vorbestimmten Parameter, der mit der Füllrate (203; 303) verbunden ist, einen Schritt der Schaffung (204; 304) mindestens einer zweiten neuen IP-Adresseinheit;
- einen Schritt der Übertragung (2061) einer Identifikationsinformation einer IP-Adresseinheit, in der die zuzuweisende IP-Adresse auszuwählen ist, die unter der mindestens einen ersten bestehenden IP-Adresseinheit und der mindestens einen zweien neuen geschaffenen IP-Adresseinheit ausgewählt wird, an ein DHCP-Relais (21; 31), das geeignet ist, die IP-Adresse dem Kundenendgerät (22; 32) zuzuweisen.

2. Verwaltungsverfahren nach Anspruch 1, **dadurch gekennzeichnet, dass** die Identifikationsinformation der IP-Adresseinheit an das DHCP-Relais (21) unter Verwendung eines spezifischen Feldes in einer DHCP-Meldung übertragen wird.

3. Verwaltungsverfahren nach Anspruch 1, **dadurch gekennzeichnet, dass** die Verwaltungsentität der IP-Adresseinheiten (20) ein DHCP-Server ist.

4. Verwaltungsentität von IP-Adresseinheiten, die geeignet ist, mit mindestens einem DHCP-Relais zu kommunizieren, umfassend:
- Empfangsmittel eines Antrags auf Zuweisung einer IP-Adresse an ein Kundenendgerät (22);
- auf Basis des erhaltenen Zuweisungsantrags Mittel zur Identifikation mindestens einer ersten bestehenden IP-Adresseinheit;
**dadurch gekennzeichnet, dass** sie auch Folgendes umfasst:
- Mittel zur Bestimmung einer Füllrate der ersten IP-Adresseinheit;
- in Abhängigkeit von mindestens einem vorbestimmten Parameter, der mit der Füllrate verbunden ist, Mittel zur Schaffung mindestens einer zweiten neuen IP-Adresseinheit;
- Mittel zur Übertragung (2061) einer Identifikationsinformation einer IP-Adresseinheit, in der die zuzuweisende IP-Adresse auszuwählen ist, die unter der mindestens einen ersten bestehenden Adresseinheit und der mindestens einen zweiten neuen geschaffenen IP-Adresseinheit ausgewählt wird, an ein DHCP-Relais (21), das geeignet ist, die IP-Adresse dem Kundenendgerät zuzuweisen.

5. Verfahren zum Zuweisen einer IP-Adresse durch ein DHCP-Relais an ein Kundenendgerät (22), umfassend einen Schritt des Sendens eines Antrags auf Zuweisung einer IP-Adresse an ein Kundenendgerät (22), wobei der Zuweisungsantrag mindestens eine erste bestehende IP-Adresseinheit identifiziert (211; 311),
**dadurch gekennzeichnet, dass** es Folgendes umfasst:
- einen Schritt des Empfangs (212; 312) einer Identifikationsinformation einer IP-Adresseinheit, in der die zuzuweisende IP-Adresse auszuwählen ist, die ausgewählt ist unter:
- entweder der mindestens einen ersten bestehenden IP-Adresseinheit;
- oder mindestens einer zweiten neu geschaffenen IP-Adresseinheit in Abhängigkeit von mindestens einem vorbestimmten Parameter, der mit einer Füllrate der mindestens einen ersten bestehenden IP-Adresseinheit verbunden ist;
- einen Schritt (213) der Zuweisung einer in der ausgewählten IP-Adresseinheit ausgewählten IP-Adresse an das Kundenendgerät.

6. Zuweisungsverfahren nach Anspruch 5, **dadurch gekennzeichnet, dass** das DHCP-Relais (21) mindestens einer Ausrüstung des Kommunikationsnetzes die ausgewählte IP-Adresseinheit über mindestens ein Routing-Protokoll ankündigt (214), wenn die ausgewählte IP-Adresseinheit neu geschaffen ist.

7. DHCP-Relais, umfassend Mittel zum Senden eines Antrags auf Zuweisung einer IP-Adresse an ein Kundenendgerät (22), wobei der Zuweisungsantrag mindestens eine erste bestehende IP-Adresseinheit identifiziert, und Mittel zur Zuweisung mindestens einer IP-Adresse an ein Kundenendgerät,
**dadurch gekennzeichnet, dass** es Mittel zum Empfang einer Identifikationsinformation einer IP-Adresseinheit, ausgewählt unter:
- entweder der mindestens einen ersten bestehenden IP-Adresseinheit;
- oder mindestens einer zweiten neu geschaffenen IP-Adresseinheit in Abhängigkeit von mindestens einem vorbestimmten Parameter, der mit einer Füllrate der mindestens einen ersten bestehenden IP-Adresseinheit verbunden ist; umfasst,
und dass die Zuweisungsmittel geeignet sind, die zuzuweisende IP-Adresse in der durch die empfangene Identifikationsinformation identifizierten ausgewählten IP-Adresseinheit auszuwählen.

8. Computerprogramm, **dadurch gekennzeichnet, dass** es Programmcodebefehle für die Ausführung der Schritte des Verwaltungsverfahrens nach Anspruch 1 umfasst, wenn es von einem Computer ausgeführt wird.

9. Computerprogramm, **dadurch gekennzeichnet, dass** es Programmcodebefehle für die Ausführung der Schritte des Zuweisungsverfahrens nach Anspruch 5 umfasst, wenn es von einem Computer ausgeführt wird.

## Claims

1. Management method carried out in an IP address set management entity (20; 30),
including:
- a step of receiving a request to assign an IP address to a client terminal (22; 32);
- a step of identifying (201; 301) at least one first existing set of IP addresses from said received assignment request;
**characterized in that** it also includes:
- a step of determining (202; 302) a fill rate of said first set of IP addresses;
- as a function of at least one predetermined parameter linked to said fill rate (203; 303), a step of creating (204; 304) at least one second new set of IP addresses;
- a step of transmitting (2061) to a DHCP relay (21; 31) capable of assigning said IP address to said client terminal (22; 32) information identifying a set of IP addresses within which to choose said IP address to be assigned, selected from said at least one first existing set of addresses and said at least one second created new set of IP addresses.

2. Management method according to Claim 1, **characterized in that** said information identifying said set of IP addresses is transmitted to said DHCP relay (21) by using a specific field in a DHCP message.

3. Management method according to Claim 1, **characterized in that** said IP address set management entity (20) is a DHCP server.

4. IP address set management entity, capable of communicating with at least one DHCP relay, including:
- means for receiving a request to assign an IP address to a client terminal (22);
- means for identifying at least one first existing set of IP addresses from said received assignment request;
**characterized in that** it also includes:
- means for determining a fill rate of said first set of IP addresses;
- means, implemented as a function of at least one predetermined parameter linked to said fill rate, for creating at least one second new set of IP addresses;
- means for transmitting (2061) to a DHCP relay (21) capable of assigning said IP address to said client terminal information identifying a set of IP addresses within which to choose said IP address to be assigned, selected from said at least one first existing set of addresses and said at least one second created new set of IP addresses.

5. Method for assignment of an IP address by a DHCP relay to a client terminal (22) including a step of transmitting a request to assign an IP address to a client terminal (22), said assignment request (211; 311) identifying at least one first existing set of IP addresses,
**characterized in that** it includes:
- a step of the receiving (212; 312) information identifying a set of IP addresses within which to choose said IP address to be assigned, selected from:
- either said at least one first existing set of IP addresses;
- or at least one second set of IP addresses newly created as a function of at least one predetermined parameter linked to a fill rate of said at least one first existing set of IP addresses;
- a step of assigning (213) an IP address chosen from said selected set of IP addresses to said client terminal.

6. Assignment method according to Claim 5, **characterized in that** said DHCP relay (21) announces (214) said selected set of IP addresses to at least one device of said communication network via at least one routing protocol when said selected set of IP addresses is newly created.

7. DHCP relay including means for transmitting a request to assign an IP address to a client terminal (22), said assignment request identifying at least one first existing set of IP addresses, and means for assigning at least one IP address to a client terminal,
**characterized in that** it includes means for receiving information identifying a set of IP addresses selected from:
- either said at least one first existing set of IP addresses;
- or at least one second set of IP addresses newly created as a function of at least one predetermined parameter linked to a fill rate of said at least one first existing set of IP addresses;
and **in that** said assignment means are capable of choosing said IP address to be assigned within said selected set of IP addresses identified by said received identification information.

8. Computer program, **characterized in that** it includes program code instructions for carrying out the steps of the management method according to Claim 1 when it is executed by a computer.

9. Computer program, **characterized in that** it includes program code instructions for carrying out the steps of the assignment method according to Claim 5 when it is executed by a computer.
